# FASCICULE DE BREVET EUROPEEN

(11) **EP 4 072 884 B1**
(45) Date de publication et mention de la délivrance du brevet: **09.07.2025**
(21) Numéro de dépôt: 20820510.4
(22) Date de dépôt: 24.11.2020
(51) Int. Cl.: B60K 11/08, F01P 7/10

(54) **SYSTÈME DE VOLETS PILOTES D'UN VÉHICULE COMPRENANT DEUX ENSEMBLES DE VOLETS**
SYSTEM VON GESTEUERTEN KLAPPEN FÜR EIN FAHRZEUG MIT ZWEI KLAPPENSÄTZEN
SYSTEM OF CONTROLLED FLAPS FOR A VEHICLE, COMPRISING TWO SETS OF FLAPS

(30) Priorité: 09.12.2019 FR 1913958
(43) Date de publication de la demande: 19.10.2022
(73) Titulaire: VALEO SYSTEMES THERMIQUES, 78320 Le Mesnil Saint-Denis (FR)
(72) Inventeur: RIPA, Jerome, 78320 LE MESNIL SAINT DENIS CEDEX (FR); MITIDIERI, Enzo, 78320 LE MESNIL SAINT DENIS (FR); LANGLET, Pierre Alexandre, 78320 LE MESNIL SAINT DENIS (FR)
(74) Mandataire: Valeo Systèmes Thermiques
(86) Numéro de dépôt international: PCT/FR2020/052162
(87) Numéro de publication internationale: WO 2021/116553

(56) Documents cités:
- DE-A1- 102016 015 116
- DE-U1- 202011 050 523
- GB-A- 2 515 640
- JP-A- 2015 182 496
- US-A1- 2018 170 170

## Description

La présente invention se rapporte à un système de volets pilotés d'un véhicule. Elle trouve une application particulière mais non limitative dans les véhicules automobiles. Elle concerne également un procédé de pilotage de volets mis en œuvre par ledit système de volets pilotés.

Dans le domaine des véhicules automobiles, un système de volets pilotés d'un véhicule, connu de l'homme du métier, est disposé derrière la calandre des véhicules automobiles, et comprend deux ensembles de volets pouvant prendre une position ouverte et une position fermée, les deux ensembles de volets étant ouverts ou fermés simultanément pour laisser passer de l'air ou empêcher le passage de l'air sous le capot moteur des véhicules automobiles. D'autres exemples de systèmes de volets pilotés sont par ailleurs montrés dans les documents GB2515640A, DE202011050523U1, JP2015182496A, DE102016015116A1 et US2018/170170A1.

Un inconvénient de cet état de la technique est que l'un des ensembles de volets, ne peut être ouvert ou fermé indépendamment de l'autre des ensembles de volets.

Dans ce contexte, la présente invention vise à proposer un système de volets pilotés d'un véhicule qui permet de résoudre l'inconvénient mentionné.

A cet effet, l'invention propose un système de volets pilotés d'un véhicule comprenant deux ensembles de volets, chaque ensemble de volets pouvant prendre une position ouverte et une position fermée, caractérisé en ce que ledit système de volets pilotés comprend en outre un actionneur configuré pour piloter l'un des ensembles de volets en position ouverte avant l'autre des ensembles de volets.

Selon des modes de réalisation non limitatifs, le système de volets pilotés d'un véhicule peut comporter en outre une ou plusieurs caractéristiques supplémentaires prises seules ou selon toutes les combinaisons techniquement possibles, parmi les suivantes.

Selon l'invention, ledit système de volets pilotés est caractérisé en ce qu'il comprend en outre :
- un ressort reliant les deux ensembles de volets,
- un levier supérieur avec une came à course morte primaire configuré pour être entraîné par une bielle de liaison,
- un levier inférieur avec une came à course morte secondaire configuré pour être entraîné par ledit actionneur, et
- ladite bielle de liaison relié audit actionneur et reliant ledit levier supérieur et ledit levier inférieur.

Selon un mode de réalisation non limitatif, ledit ressort est configuré pour :
- être tendu lorsque les deux ensembles de volets sont en position fermée,
- se détendre de sorte à positionner en position ouverte l'un des ensembles de volets,
- être tendu lorsque les deux ensembles de volets sont en position ouverte.

Selon un mode de réalisation non limitatif, les deux ensembles de volets sont initialement en position fermée.

Selon un mode de réalisation non limitatif, l'un des ensembles de volets s'étend selon un plan différent de l'autre des ensembles de volets ou les deux ensembles de volets sont coplanaires.

Selon un mode de réalisation non limitatif, ledit système de volets pilotés comprend en outre :
- un pièce de liaison primaire reliant les volets de l'un des ensembles de volets et comprenant au moins un doigt d'entraînement primaire qui vient en butée dans la came à course morte primaire lorsque l'un des ensembles de volets est en position ouverte ou en position fermée,
- un pièce de liaison secondaire reliant les volets de l'autre des ensembles de volets et comprenant au moins un doigt d'entraînement secondaire qui vient en butée dans la came à course morte secondaire lorsque l'autre des ensembles de volets est en position ouverte ou en position fermée, et qui glisse le long de ladite came à course morte secondaire lorsque l'un des ensembles est en position ouverte

Il est également proposé un procédé de pilotage d'un système de volets pilotés d'un véhicule selon l'invention, lesdits volets faisant partie de deux ensembles de volets, chaque ensemble de volets pouvant prendre une position ouverte et une position fermée, caractérisé en ce que ledit procédé de pilotage comprend une étape de piloter en position ouverte l'un des ensembles de volets avant l'autre des ensembles de volets.

Selon un mode de réalisation non limitatif, les deux ensembles de volets sont initialement en position fermée.

Selon un mode de réalisation non limitatif, pour piloter les deux ensembles de volets en position ouverte, ledit procédé de pilotage exécute l'étape de pilotage en position ouverte de l'un des ensembles de volets avant l'autre des ensembles de volets.

Selon un mode de réalisation non limitatif, pour piloter les deux ensembles de volets en position fermée, ledit procédé de pilotage exécute l'étape de pilotage en position fermée de l'autre des ensembles de volets avant l'un des ensembles de volets.

L'invention et ses différentes applications seront mieux comprises à la lecture de la description qui suit et à l'examen des figures qui l'accompagnent :
[Fig. 1] illustre schématiquement un système de volets pilotés d'un véhicule comprenant deux ensembles de volets, un actionneur, un ressort, un levier supérieur avec une came à course morte, un levier inférieur avec une came à course morte, et une bielle de liaison, selon un mode de réalisation non limitatif de l'invention,
[Fig. 2a] illustre une vue en perspective des deux ensembles de volets, du ressort, du levier supérieur avec une came à course morte, du levier inférieur avec une came à course morte, et de la pièce de liaison du système de volets pilotés de la figure 1, lorsque les deux ensembles de volets sont dans une position fermée, selon un mode de réalisation non limitatif,
[Fig. 2b] illustre une vue de profil des éléments de la figure 2a, sans les deux ensembles de volets, selon un mode de réalisation non limitatif,
[Fig. 3a] illustre une vue en perspective des deux ensembles de volets, du ressort, du levier supérieur avec une came à course morte, du levier inférieur avec une came à course morte, et une la de liaison du système de volets pilotés de la figure 1, lorsque l'un des ensembles de volets est dans une position ouverte et l'autre des ensembles de volets est dans une position fermée, selon un mode de réalisation non limitatif,
[Fig. 3b] illustre une vue de profil des éléments de la figure 3a, sans les deux ensembles de volets, selon un mode de réalisation non limitatif,
[Fig. 4a] illustre une vue en perspective des deux ensembles de volets, du ressort, du levier supérieur, du levier inférieur, et une la de liaison du système de volets pilotés de la figure 1, lorsque les deux ensembles de volets sont dans une position ouverte, selon un mode de réalisation non limitatif,
[Fig. 4b] illustre une vue de profil des éléments de la figure 4a, sans les deux ensembles de volets, selon un mode de réalisation non limitatif,
[Fig. 5a] illustre une vue zoomée de l'un des ensembles de volets, du levier supérieur, et de la bielle avec leurs axes de rotation de la figure 3a, selon un mode de réalisation non limitatif,
[Fig. 5b] illustre une vue zoomée de l'autre des ensembles de volets, du levier inférieur, et de la bielle avec leurs axes de rotation de la figure 3a, selon un mode de réalisation non limitatif,
[Fig. 6a] illustre une vue zoomée d'une pièce de liaison primaire qui relie les volets de l'un des ensembles de volets et qui coopère avec le levier supérieur de la figure 1, selon un mode de réalisation non limitatif,
[Fig. 6b] illustre une vue zoomée d'une pièce de liaison secondaire qui relie les volets de l'autre des ensembles de volets et qui coopère avec le levier inférieur de la figure 1, selon un mode de réalisation non limitatif,
[Fig. 7] illustre une séquence d'ouverture des deux ensembles de volets du système de volets pilotés de la figure 1, selon un mode de réalisation non limitatif, et
[Fig. 8] illustre un diagramme d'un procédé de pilotage de volets mis en œuvre par le système de volets pilotés de la figure 1, selon un mode de réalisation non limitatif de l'invention,
[Fig. 9] illustre un diagramme du procédé de pilotage de volets de la figure 8 avec des étapes supplémentaires, selon un mode de réalisation non limitatif.

Les éléments identiques, par structure ou par fonction, apparaissant sur différentes figures conservent, sauf précision contraire, les mêmes références.

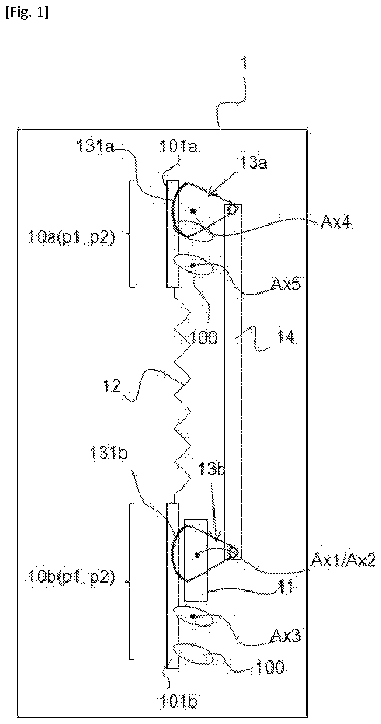

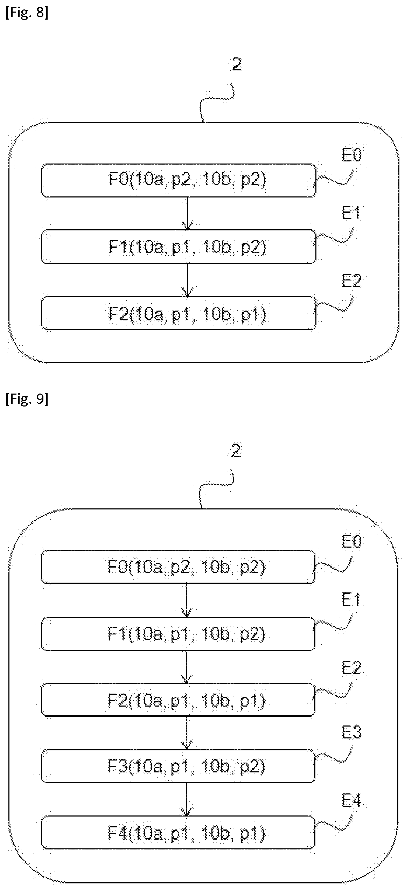

L'invention concerne un système de volets pilotés 1 d'un véhicule. Il est décrit en référence aux figures 1 à 7. L'invention concerne également un procédé de pilotage 2 de volets 100 d'un véhicule mis en œuvre par ledit système de volets pilotés 1. Il est décrit en référence aux figures 8 et 9. Dans un mode de réalisation non limitatif, le véhicule est un véhicule automobile. Par véhicule automobile, on entend tout type de véhicule motorisé. Ce mode de réalisation est pris comme exemple non limitatif dans la suite de la description. Dans la suite de la description, le véhicule est ainsi autrement appelé véhicule automobile.

Le système de volets pilotés 1 appelé dans le langage anglo-saxon « Air Grille Shutter » est disposé derrière la calandre du véhicule automobile. Il est relié à un ou plusieurs échangeurs d'air. Le système de volets pilotés 1 permet de laisser passer l'air provenant l'extérieur du véhicule automobile sous le capot moteur ou d'interdire le passage de l'air sous le capot moteur du véhicule automobile.

Tel qu'illustré sur la figure 1, dans un mode de réalisation non limitatif, le système de volets pilotés 1 comprend :
- deux ensembles 10a, 10b de volets 100,
- un actionneur 11,
- un ressort 12,
- un levier supérieur 13a avec une came à course morte primaire 131a, autrement appelé levier supérieur 13a ou levier primaire 13a,
- un levier inférieur 13b avec une came à course morte secondaire 131b, autrement appelé levier inférieur 13b ou levier secondaire 13b,
- une bielle de liaison 14.

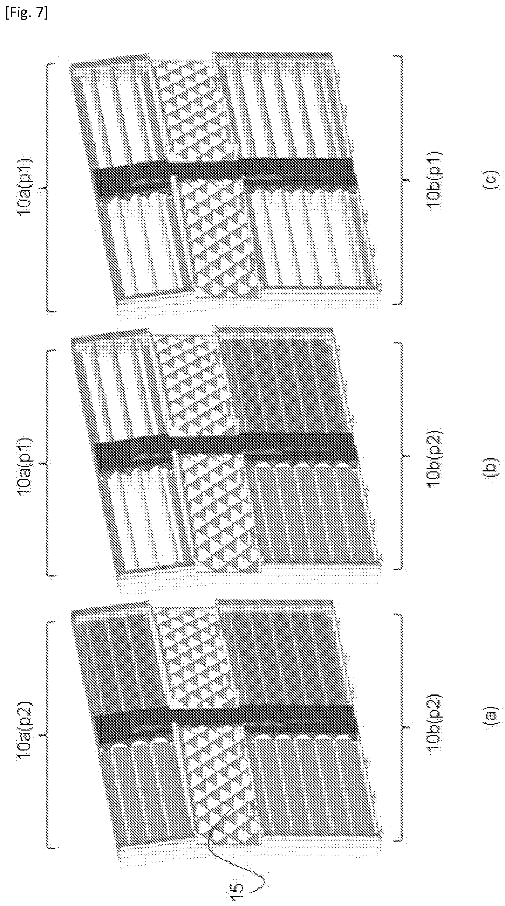

On notera que pour des questions de clarté, seuls quelques volets 100 ont été illustrés sur le schéma de la figure 1. Dans la suite de la description, les ensembles 10a, 10b de volets 100 seront indifféremment appelés ensembles 10a, 10b. Les deux ensembles 10a, 10b de volets 100 peuvent prendre une position ouverte p1 ou une position fermée p2. Ils sont séparés par une traverse antichoc 15 tel qu'illustré sur la figure 7. Il y a ainsi un ensemble 10a de volets 100, autrement appelé premier ensemble 10a ou voie haute 10a ; et un ensemble 10b de volets, autrement appelé deuxième ensemble 10b ou voie basse 10b. Chaque ensemble 10a, 10b comprend un ou plusieurs volets 100 et le même nombre ou un nombre différents de volets 100. Dans l'exemple non limitatif de la figure 7, l'ensemble 10a et l'ensemble 10b ont un nombre différent de volets 100.

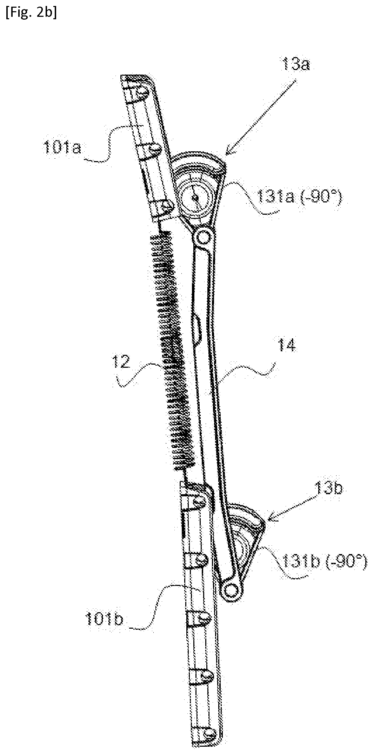

Les volets 100 de l'ensemble 10a sont reliés entre eux par une pièce de liaison primaire 101a (illustrée sur les figures 2b, 3b, 4b, 6a et 6b). Les volets 100 de l'ensemble 10b sont reliés entre eux par une pièce de liaison secondaire 101b (illustrée sur les figures 2b, 3b, 4b, 6a et 6b).

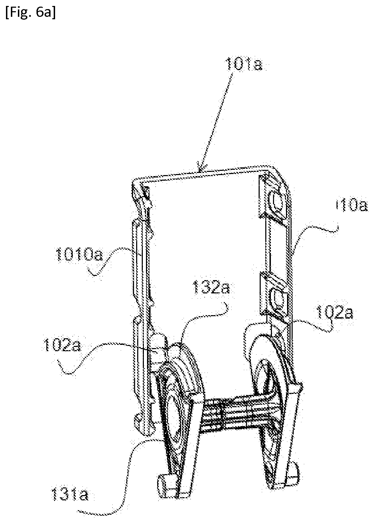

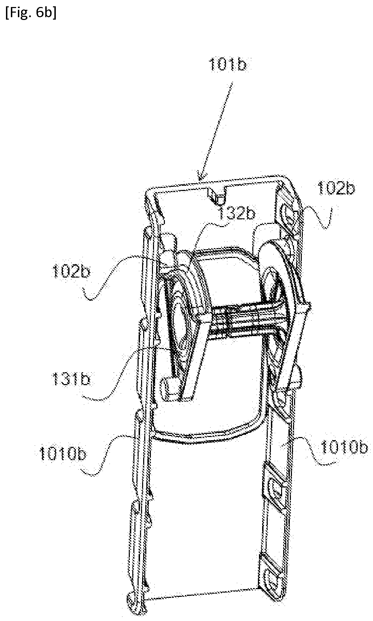

Dans un mode de réalisation non limitatif, chaque ensemble 10a, 10b de volets 100 comprend deux jeux de volets 100, un droit et un gauche. Dans ce cas, dans un mode de réalisation non limitatif illustré sur la figure 6a, la pièce de liaison primaire 101a comprend deux côtés 1010a permettant d'accrocher respectivement chaque jeu de volets 100. De même, dans un mode de réalisation non limitatif illustré sur la figure 6b, la pièce de liaison secondaire 101b comprend deux côtés 1010b permettant d'accrocher respectivement chaque jeu de volets 100.

Les deux ensembles 10a, 10b sont initialement en position fermée p2 tel qu'illustré sur la figure 7. Par initialement, on entend au démarrage du véhicule automobile. Dans un mode de réalisation non limitatif, l'un 10a des ensembles 10a, 10b s'étend selon un plan différent de l'autre 10b des ensembles 10a, 10b. Dans un autre mode de réalisation non limitatif, les deux ensembles 10a, 10b s'étendent selon un même plan. Ils sont ainsi coplanaires. Dans une variante de réalisation non limitative, les deux ensembles 10a, 10b s'étendent selon un même plan incliné, ou les deux ensembles 10a,10b peuvent aussi s'étendre dans des plans parallèles entre eux, ou encore selon deux plans distincts non-parallèles.

Dans un mode de réalisation non limitatif illustré sur les figure 6a et 6b, l'un 10a des ensembles 10a, 10b comprend au moins un doigt d'entraînement primaire 102a qui est configuré pour venir en butée dans la came à course morte primaire 131a du levier supérieur 13a lorsque l'un 10a des ensembles 10a, 10b est en position ouverte p1 ou en position fermée p2. En particulier, c'est la pièce de liaison primaire 101a qui comprend ce doigt d'entraînement primaire 102a. Dans l'exemple non limitatif illustré, elle comprend deux doigts d'entraînement primaires 102a disposés de chaque côté 1010a de la pièce de liaison primaire 101a. Dans un mode de réalisation non limitatif, ces deux doigts d'entraînement primaires 102a sont tournés vers l'intérieur. La course morte 132a (illustrée sur la figure 6a) de la came à course morte primaire 131a peut se déplacer le long du doigt d'entraînement primaire 102a.

Dans un mode de réalisation non limitatif illustré sur la figure 6b, l'autre 10b des ensembles 10a, 10b comprend au moins un doigt d'entraînement secondaire 102b qui est configuré pour venir en butée dans la came à course morte secondaire 131b du levier secondaire 13b lorsque l'autre 10b des ensembles 10a, 10b est en position ouverte p1 ou en position fermée p2. En particulier, c'est la pièce de liaison secondaire 101b qui comprend ce doigt d'entraînement secondaire 102b. Dans l'exemple non limitatif illustré, elle comprend deux doigts d'entraînement secondaire 102b disposés de chaque côté 1010b de la pièce de liaison primaire 101b. Dans un mode de réalisation non limitatif, ces deux doigts d'entraînement secondaires 102b sont tournés vers l'intérieur.

Par ailleurs, le doigt d'entraînement secondaire 102b glisse dans ladite came à course morte secondaire 131b lorsque l'un 10a des ensembles 10a, 10b est en position ouverte p1. La course morte 132b (illustrée sur la figure 6b) de la came à course morte secondaire 131b se déplace le long du doigt d'entraînement secondaire 131b.

L'actionneur 11 est configuré pour piloter l'un 10a des ensembles 10a, 10b de volets 100 en position ouverte p1 avant l'autre 10b des ensembles 10a, 10b de volets 100. On a ainsi une ouverture séquencée des volets 100. Ainsi, il ouvre les volets de l'un des ensembles 10a, 10b avant l'autre 10b des ensembles 10a, 10b. L'actionneur 11 peut ainsi piloter les deux ensembles 10a, 10b de volets 100 de façon indépendante l'un de l'autre. Ainsi, on peut avoir une stratégie de pilotage de volets (ouverture/fermeture) modulable, et ce au moyen d'un unique actionneur 11. Dans le mode de réalisation non limitatif où chaque ensemble 10a, 10b comprend deux jeux de volets (droit et gauche) et où la pièce de liaison primaire 101a comprend deux côtés 1010a et la pièce de liaison secondaire 101b comprend deux côtés 1010b, dans un mode de réalisation non limitatif, l'actionneur 11 est à double sortie afin d'équilibrer les efforts sur la pièce de liaison primaire 101a et la pièce de liaison secondaire 101b. L'action simultanée de l'effort de chaque côté 1010a de la pièce de liaison primaire 101a lui assure un mouvement linéaire. Il en est de même avec la pièce de liaison secondaire 101b. Cela permet de limiter au maximum des efforts parasites dus au dévoiement de la pièce de liaison primaire 101a par l'action d'un seul levier supérieur 13a. Cela permet de limiter au maximum des efforts parasites dus au dévoiement de la pièce de liaison secondaire 101b par l'action d'un seul levier inférieur 13b. Cela est intéressant d'avoir un actionneur 11 à double sortie notamment dans ce type de cinématique où :
- le guidage des doigts d'entraînement primaires 102a dans les courses mortes primaires 131a du levier supérieur 13a est tributaire du bon alignement de l'ensemble, à savoir l'alignement des deux doigts d'entraînement primaires 102a entre eux lorsqu'ils coopèrent avec les courses mortes primaires 131a,
- le guidage des doigts d'entraînement secondaires 102b dans les courses mortes secondaires 131b du levier inférieur 13b est tributaire du bon alignement de l'ensemble, à savoir l'alignement des deux doigts d'entraînement secondaires 102b entre eux lorsqu'ils coopèrennt avec les courses mortes secondaires 131b.

Un tel actionneur à double sortie étant connu de l'homme du métier, il n'est pas décrit plus en détail ici.

La stratégie de pilotage de volets peut comporter :
- l'ouverture de tous les volets 100 des deux ensembles 10a, 10b,
- la fermeture de tous les volets 100 des deux ensembles 10a, 10b,
- l'ouverture des volets de l'un 10a des ensembles 10a, 10b et la fermeture des volets 100 de l'autre 10b des ensembles 10a, 10b,
- la fermeture des volets de l'un 10a des ensembles 10a, 10b et l'ouverture des volets de l'autre 10b des ensembles 10a, 10b.

Dans un exemple de réalisation non limitatif, on ouvre les volets 100 des deux ensembles 10a, 10b de volets 100 lors d'une phase d'échauffement du moteur thermique. Cela peut survenir lorsque le véhicule automobile roule lentement et dans une côte. A ce moment, il y a en effet peu d'air qui arrive sous le capot moteur et on fait entrer de l'air pour refroidir le moteur.

Dans un exemple de réalisation non limitatif, on ferme les volets des deux ensembles 10a, 10b de volets 100 :
- lorsqu'on veut améliorer la pénétration dans l'air du véhicule automobile. On évite de créer ainsi des turbulences sous le capot moteur en évitant que de l'air n'entre sous le capot moteur. Ainsi, on a un gain en vitesse, on diminue la consommation de carburant et donc l'émission de CO2,
- par périodes de grands froids, pour que l'air qui se trouve déjà sous le capot moteur soit dans un circuit fermé et chauffe le moteur de sorte à faciliter un démarrage rapide du véhicule automobile, et réduire ainsi la consommation de carburant,
- lorsque le véhicule automobile est à l'arrêt pendant quelques heures pour éviter que le moteur ne refroidisse et pour faciliter ainsi le démarrage du véhicule automobile par la suite.

L'actionneur 11 est relié au levier inférieur 13b. Il est configuré pour entraîner ledit levier inférieur 13b. L'actionneur 11 est mis en mouvement par un moteur (non illustré). Une unité de contrôle électronique (non illustrée) permet d'envoyer des signaux de commande audit actionneur 11 pour le mettre en mouvement, en fonction de la stratégie de pilotage de volets définie.

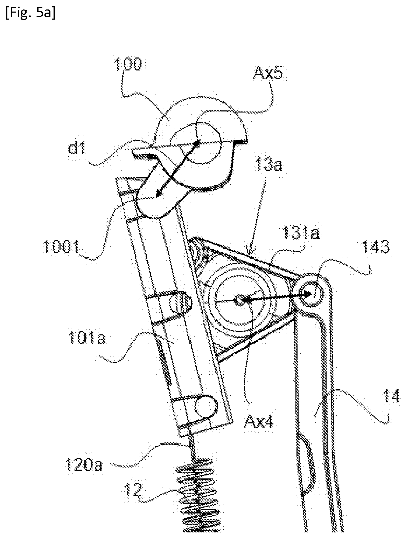

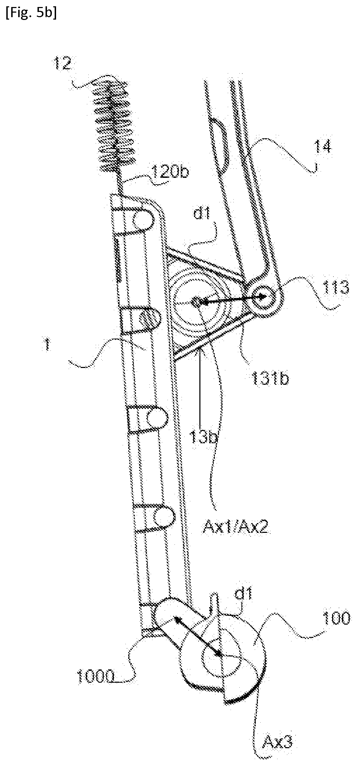

Tel qu'illustré sur la figure 1, dans un mode de réalisation non limitatif, l'axe de rotation Ax1 de l'actionneur 11 est le même que l'axe de rotation Ax2 du levier inférieur 13b. Par ailleurs, tel qu'illustré sur la figure 5a, l'axe de rotation Ax2 du levier inférieur 13b se situe sur le même plan que l'axe de rotation Ax3 de chaque volet 100 de l'ensemble 10b. Cela permet d'avoir une bonne cinématique. Par souci de clarté, la figure 5b n'illustre qu'un seul volet 100.

Tel qu'illustré sur la figure 5b, l'axe de rotation Ax2 du levier inférieur 13b est distant d'une distance d1 avec le point d'appui 113 de l'actionneur 11 sur le levier inférieur 13b. Tel qu'illustré sur la figure 5b, l'axe de rotation Ax3 de chaque volet 100 de l'ensemble 10b présente une même distance d1 avec un point de fixation 1000 de chaque volet 100 sur la pièce de liaison secondaire 101b. Dans un mode de réalisation non limitatif, la distance d1 est supérieure ou égale à 17mm. On notera qu'en dessous de cette valeur, des problèmes de faisabilité pourraient se poser. Ainsi, la came à course morte secondaire 131b du levier inférieur 13b effectue un déplacement identique en distance que la pièce de liaison secondaire 101b.

Le ressort 12 relie les deux ensembles 10a, 10b de volets 100. Il est ainsi accroché à l'un 10a des ensembles 10a, 10b, et à l'autre des ensembles 10a, 10b par l'intermédiaire respectivement de la pièce de liaison primaire 101a qui relie les volets 100 de l'un 10a des ensembles 10a, 10b, et de la pièce de liaison secondaire 101b qui relie les volets 100 de l'autre 10b des ensembles 10a, 10b. Ainsi, une de ses extrémités 120a (illustrée sur la figure 5a) est accrochée à la pièce de liaison primaire 101a, et l'autre (illustrée sur la figure 5a) de ses extrémités 120b (illustrée sur la figure 5b) est accrochée à la pièce de liaison secondaire 101b.

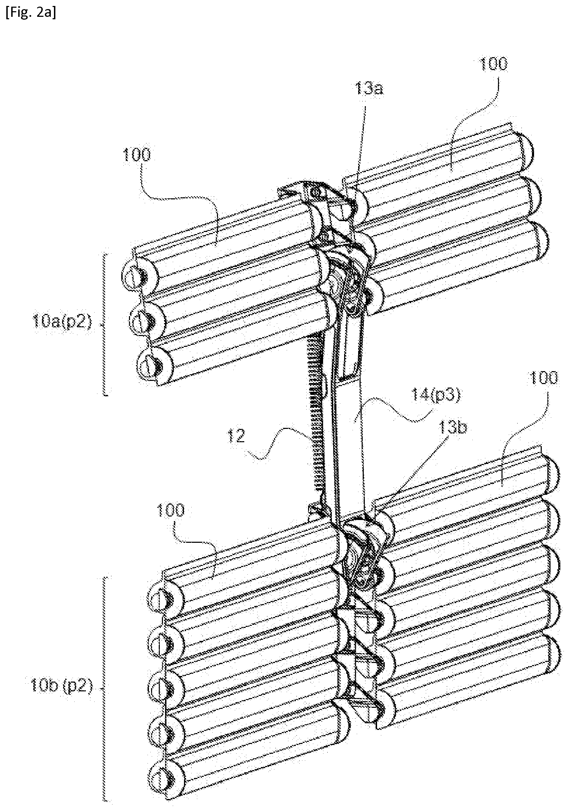

Tel qu'illustré sur les figures 2a et 2b, le ressort 12 est configuré pour être tendu par le haut lorsque les deux ensembles 10a, 10b de volets 100 sont en position fermée p2. La figure 7 illustre les volets 100 de la voie haute 10a fermés et les volets 100 de la voie basse 10b fermés (phase a).

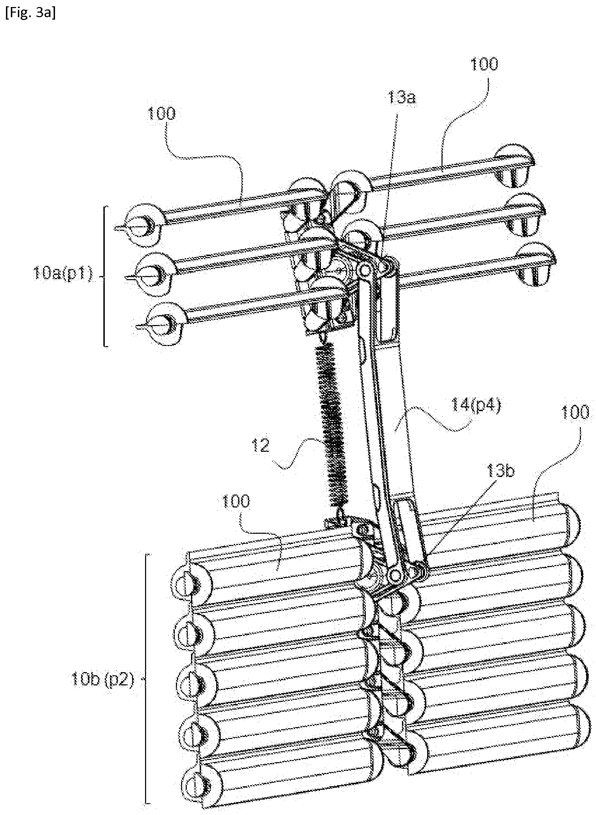

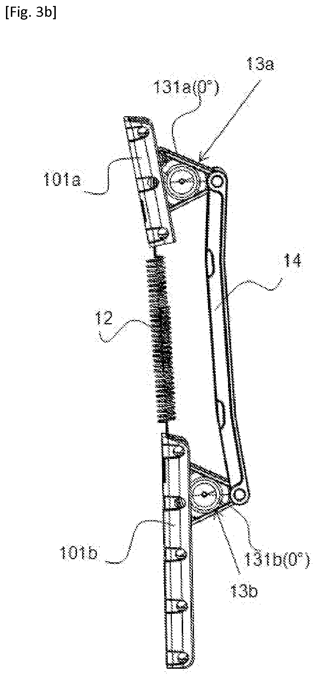

Tel qu'illustré sur les figures 3a et 3b, le ressort 12 est configuré pour se détendre (position au repos) de sorte à positionner en position ouverte p1 l'un 10a des ensembles de volets 100 tandis que l'autre 10b des ensembles de volets 100 est maintenu en position fermée p2. La figure 7 illustre les volets 100 de la voie haute 10a ouverts et les volets 100 de la voie basse 10b fermés (phase b).

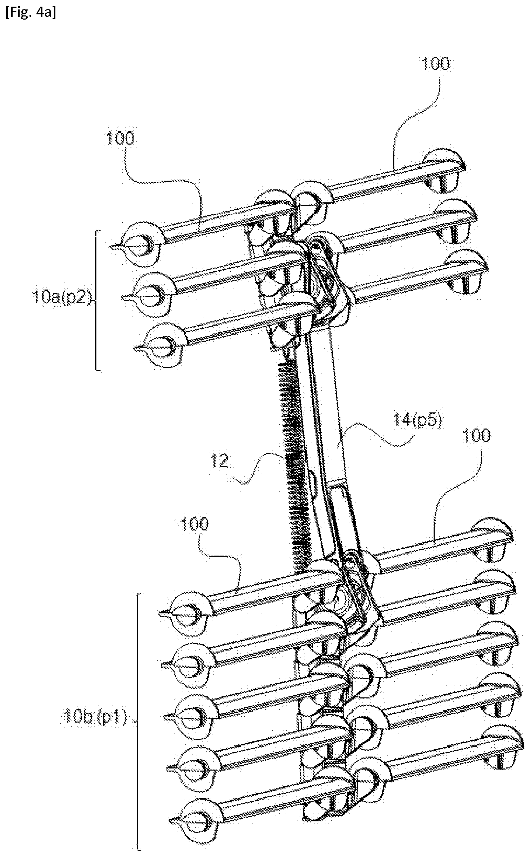

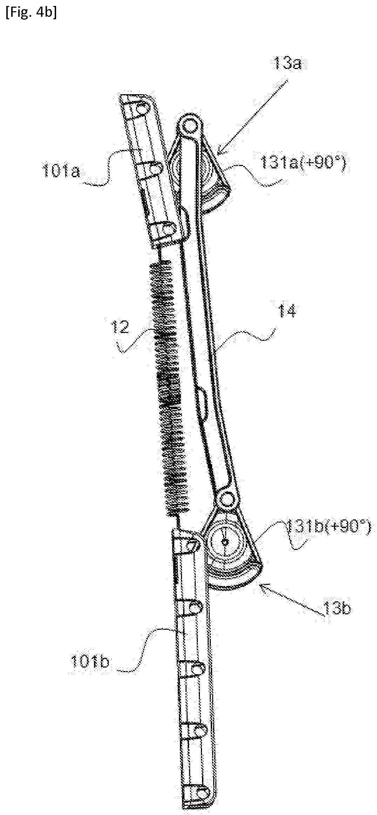

Tel qu'illustré sur les figures 4a et 4b, le ressort 12 est configuré pour être tendu par le bas lorsque les deux ensembles 10a, 10b de volets 100 sont en position ouverte p1. La figure 7 illustre les volets 100 de la voie haute 10a ouverts et les volets 100 de la voie basse 10b ouverts (phase c).

Tel qu'illustré sur les figures 2a à 4b, le levier supérieur 13a et le levier inférieur 13b sont reliés par la bielle de liaison 14. Le levier supérieur 13a est ainsi configuré pour être entraîné par la bielle de liaison 14. Le levier inférieur 13b est configuré pour être entraîné par l'actionneur 11 car relié audit actionneur 11 et par conséquent il est configuré pour pousser la bielle de liaison 14.

Tel qu'illustré sur la figure 5a, dans un mode de réalisation non limitatif, l'axe de rotation Ax4 du levier supérieur 13a se situe sur le même plan que l'axe de rotation Ax5 de chaque volet 100 de l'ensemble 10a. Cela permet d'avoir une bonne cinématique. Par souci de clarté, la figure 5b n'illustre qu'un seul volet 100. L'axe de rotation Ax2 du levier inférieur 13b se situe sur le même plan que l'axe de rotation Ax4 du levier supérieur 13a.

Tel qu'illustré sur la figure 5a, l'axe de rotation Ax4 du levier supérieur 13a est distant d'une distance d1 avec le point d'appui 143 de la bielle 14 sur le levier supérieur 13a. Tel qu'illustré sur la figure 5a, l'axe de rotation Ax5 de chaque volet 100 de l'ensemble 10a présente une même distance d1 avec un point de fixation 1001 de chaque volet 100 sur la pièce de liaison primaire 101a. Dans un mode de réalisation non limitatif, la distance d1 est inférieure à 30mm (millimètres). Ainsi, la came à course morte primaire 131a du levier supérieur 13a effectue un déplacement identique en distance que la pièce de liaison primaire 101a.

La came à course morte primaire 131a du levier supérieur 13a est configurée pour coopérer avec au moins un doigt d'entraînement primaire 102a de la pièce de liaison primaire 101a. Dans l'exemple non limitatif illustré sur la figure 6a, elle coopère avec deux doigts d'entraînement primaires 102a. Dans ce cas, c'est une double came à course morte. La came à course morte secondaire 131b du levier inférieur 13b est configurée pour coopérer avec au moins un doigt d'entraînement secondaire 102b de la pièce de liaison secondaire 101b. Dans l'exemple non limitatif illustré sur la figure 6a, elle coopère avec deux doigts d'entraînement secondaires 102b. Dans ce cas, c'est une double came à course morte.

Dans un mode de réalisation non limitatif, la came à course morte primaire 131a peut prendre des positions entre -90° et + 90°. La position à -90° (illustrée sur la figure 2b) correspond à tous les volets 100 de l'ensemble 10a fermés (illustrés sur la figure 2a). La position à 0° (illustrée sur la figure 3b) correspond à tous les volets 100 de l'ensemble 10a ouverts (illustrés sur la figure 3a). La position à +90° (illustrée sur la figure 4b) correspond à tous les volets 100 de l'ensemble 10a ouverts (illustrés sur la figure 4a).

Dans un mode de réalisation non limitatif, la came à course morte secondaire 131b peut prendre des positions entre -90° et + 90°. La position à -90° (illustrée sur la figure 2b) correspond à tous les volets 100 de l'ensemble 10b fermés (illustrés sur la figure 2a). La position à 0° (illustrée sur la figure 3b) correspond à tous les volets 100 de l'ensemble 10b fermés. (illustrés sur la figure 3a). La position à +90° (illustrée sur la figure 4b) correspond à tous les volets 100 de l'ensemble 10b ouverts (illustrée sur la figure 4a).

Ainsi, tel qu'illustré sur les figures 2a et 2b, lorsque la voie haute 10a et la voie basse 10b sont en position fermée p2, la came à course morte primaire 131a est dans une position à -90° et la came à course morte secondaire 131b est également dans une position à -90°.

Ainsi, tel qu'illustré sur les figures 3a et 3b, lorsque la voie haute 10a est en position ouverte p1 et la voie basse 10b est en position fermée p2, la came à course morte primaire 131a est dans une position à 0° et la came à course morte secondaire 131b est également dans une position à 0°.

Ainsi, tel qu'illustré sur les figures 4a et 4b, lorsque la voie haute 10a et la voie basse 10b sont en position ouverte p1, la came à course morte primaire 131a est dans une position à +90° et la came à course morte secondaire 131b est également à +90°.

Ainsi, pour passer de la position fermée p2 où tous les volets 100 sont fermés à la position ouverte p1 où tous les volets 100 sont ouverts, la came à course primaire 131a et la came à course secondaire 131b auront effectué une rotation de +180°.

Des positions autres que -90°, 0° et +90° peuvent être prises. Ainsi, dans un autre exemple non limitatif, la came à course morte primaire 131a est dans une position à -45° et la came à course morte secondaire 131b est également dans une position à -45°. Dans ce cas, les volets 100 de la voie haute 10a sont à moitié ouverts tandis que les volets 100 de la voie basse 10b restent fermés. Ainsi, dans un autre exemple non limitatif, la came à course morte primaire 131a est dans une position à +45° et la came à course morte secondaire 131b est également dans une position à +45°. Dans ce cas, les volets 100 de la voie basse 10b sont à moitié ouverts tandis que les volets 100 de la voie haute 10a sont déjà complètement ouverts. On remarquera qu'on ne peut avoir les volets 100 de la voie haute 10a et de la voie basse 10b en même temps à moitié ouverts.

On remarquera que lorsque la came à course morte primaire 131a et la came à course morte secondaire 131b sont comprises entre un angle de -90° à 0°, on influe sur la voie haute 10a alors que la voie basse 10b reste en position fermée p2. Tandis que lorsque la came à course morte primaire 131a et la came à course morte secondaire 131b sont comprises entre un angle de 0° à +90°, on influe sur la voie basse 10b alors que la voie haute 10a reste en position ouverte p1. On fait ainsi fonctionner un ensemble 10a, 10b de volets 100 indépendamment l'un de l'autre.

Ainsi, en fonction de la stratégie de pilotage des volets 100, on peut plus ou moins ouvrir les volets 100 de l'ensemble 10a et/ou de l'ensemble 10b afin de laisser plus ou moins passer de l'air sous le capot moteur.

La bielle de liaison 14 qui relie le levier supérieur 13a et le levier inférieur 13b est configurée pour entraîner le levier supérieur 13a, à savoir elle est configurée pour mettre en rotation le levier supérieur 13a.

Tel qu'illustré sur la figure 2a, lorsque la voie haute 10a et la voie basse 10b sont en position fermée p2, la bielle de liaison 14 est proche du ressort 12 et se trouve dans une position dite basse p3.

Tel qu'illustré sur la figure 3a, lorsque la voie haute 10a est en position ouverte p1 et la voie basse 10b sont en position fermée p2, la bielle de liaison 14 est plus éloignée du ressort 12, et se trouve dans une position dite intermédiaire p4.

Tel qu'illustré sur la figure 4a, lorsque la voie haute 10a et la voie basse 10b sont en position ouverte p1, la bielle de liaison 14 est de nouveau proche du ressort 12 et se trouve dans une position dite haute p5.

Le système de volets pilotés 1 d'un véhicule ainsi décrit est configuré pour mettre en œuvre un procédé de pilotage 2 de volets 100 (autrement appelé procédé de pilotage 2), lesdits volets 100 faisant partie de deux ensembles 10a, 10b de volets 100. Le procédé de pilotage 2 est décrit ci-après en référence aux figures 8 et 9. Le pilotage est réalisé par l'actionneur 11.

La séquence illustrée à la figure 7 est prise comme exemple non limitatif. Tel qu'illustré sur la figure 7, les volets 100 de la voie haute 10a et la voie basse 10b sont initialement fermés p2 (phase (a)). La voie haute 10a et la voie basse 10b sont en position fermée p2. Les volets 100 de la voie haute 10a vont être ouverts avant ceux de la voie basse 10b (phase (b)). Puis, Les volets 100 de la voie basse 10b vont être ouverts (phase (c)). Au final, les volets 100 de la voie haute 10a et de la voie basse 10b seront tous ouverts. La voie haute 10a et la voie basse 10b seront en position ouverte p1.

Le procédé de pilotage 2 comprend les étapes suivantes selon un mode de réalisation non limitatif.

Tel qu'illustré sur la figure 8, le procédé de pilotage 2 comprend une étape initiale E0), illustrée F0(10a, p2, 10b, p2), dans laquelle les deux ensembles 10a, 10b de volets 100 sont initialement positionnés en position fermée p2. Lorsque la voie haute 10a et la voie basse 10b sont initialement en position fermée p2, le ressort 12 est étiré vers le haut par la pièce de liaison primaire 101a. Il est ainsi tendu par le haut. Par ailleurs, la came à course morte primaire 131a du levier supérieur 13a est positionnée à -90° ainsi que la came à course morte secondaire 131b du levier inférieur 13b. Le doigt d'entraînement primaire 102a de la voie haute 10a est en butée dans la came à course morte primaire 131a. Le doigt d'entraînement secondaire 102b de la voie basse 10b est en butée dans la came à course morte secondaire 131b.

Tel qu'illustré sur la figure 8, à l'étape E1), illustrée F1(10a, p1, 10b p2), l'un 10a des ensembles 10a, 10b de volets 100 est positionné en position ouverte p1 avant l'autre 10b des ensembles de volets 100. Dans l'exemple non limitatif illustré, c'est la voie haute 10a qui est positionnée en position ouverte p1.

L'actionneur 11 qui est relié au levier inférieur 13b fait tourner la came à course morte secondaire 131b du levier inférieur 13b dans le sens inverse des aiguilles d'une montre. Elle passe ainsi de la position -90° à 0°. La came à course morte secondaire 131b glisse le long du doigt d'entraînement secondaire 102b de la pièce de liaison secondaire 101b. La pièce de liaison secondaire 101b ne bouge pas. La voie basse 10b dont les volets 100 sont reliés par la pièce de liaison secondaire 101b ne change pas de position. Les volets 100 de la voie basse 10b restent fermés.

Le levier inférieur 13b qui est relié également à la bielle de liaison 14 lorsqu'il se met en mouvement entraîne ladite bielle de liaison 14 ; il la pousse vers le haut. Cette dernière effectue une course circulaire et monte. La bielle de liaison 14 qui est également reliée au levier supérieur 13a entraîne ledit levier supérieur 13a et fait tourner la came à course morte primaire 131a de ce dernier dans le sens inverse des aiguilles d'une montre. Elle passe ainsi de la position -90° à 0°. La came à course morte primaire 131a libère le doigt d'entraînement primaire 102a de la pièce de liaison primaire 101a. Le ressort 12 qui est relié à la pièce de liaison primaire 101a se détend, et la pièce de liaison primaire 101a descend vers le bas. Les volets 100 de la voie haute 10a s'ouvrent.

Ainsi, on a les volets 100 de la voie haute 10a qui sont ouverts, et les volets 100 de la voie basse 10b qui restent fermés. On est dans une configuration d'une partie des volets 100 du système de volets pilotés 1 ouverts et d'une autre partie des volets 100 fermés.

Tel qu'illustré sur la figure 8, à l'étape E2), illustrée F2(10a, p1, 10b, p1), l'autre 10b des ensembles 10a, 10b de volets 100 est positionné en position ouverte p1. Dans l'exemple non limitatif illustré, c'est la voie basse 10b qui est positionnée cette fois-ci également en position ouverte p1.

L'actionneur 11 qui est relié au levier inférieur 13b fait tourner de nouveau la came à course morte secondaire 131b du levier inférieur 13b dans le sens inverse des aiguilles d'une montre. La came à course morte secondaire 131b passe ainsi de la position 0° à +90°. Elle a ainsi effectué de nouveau une rotation de -90°. Le doigt d'entraînement secondaire 102b de la voie basse 10b qui est en butée sur la came à course morte secondaire 131b du levier inférieur 13b entraîne la pièce de liaison secondaire 101b vers le bas du fait de la rotation de la came à course morte secondaire 131b. Le ressort 12 qui est relié à la pièce de liaison secondaire 101b est étiré vers le bas par la pièce de liaison secondaire 101b. Il est ainsi tendu par le bas. Les volets 100 de la voie basse 10b s'ouvrent.

Le levier inférieur 13b qui est relié également à la bielle de liaison 14 lorsqu'il se met en mouvement entraîne ladite bielle de liaison 14 ; il la pousse toujours vers le haut. Cette dernière continue sa course circulaire et continue de monter. La bielle de liaison 14 qui est également reliée au levier supérieur 13a, entraîne ledit levier supérieur 13a et fait tourner la came à course morte primaire 131a de ce dernier dans le sens inverse des aiguilles d'une montre. La came à course morte primaire 131a passe ainsi de la position -0° à +90°. Elle a ainsi effectué de nouveau une rotation de -90°. La came à course morte primaire 131a glisse le long du doigt d'entraînement primaire 102a de la pièce de liaison primaire 101a. La pièce de liaison primaire 101a ne bouge pas. La voie haute 10a dont les volets 100 sont reliés par la pièce de liaison primaire 101a ne change pas de position. Les volets 100 de la voie haute 10a restent ouverts.

Ainsi, on a les volets 100 de la voie basse 10b qui s'ouvrent, et les volets 100 de la voie haute 10a qui restent ouverts. On est dans une configuration de tous les volets 100 du système de volets pilotés 1 ouverts.

On notera que pour passer de l'étape initiale à l'étape E2, la came à course primaire 102a et la came à course morte secondaire 102b ont effectué une rotation de -180° (dans le sens inverse des aiguilles d'une montre).

On notera que pour piloter tous les deux ensembles 10a, 10b de volets 100 en position ouverte p1, ledit procédé de pilotage 2 exécute l'étape de pilotage en position ouverte p1 de l'un 10a des ensembles 10a, 10b de volets 100 avant l'autre 10b des ensembles 10a, 10b de volets 100. Ainsi, pour passer de la phase a sur la figure 7, à la phase c sur la figure 7 on passe par la phase b sur la figure 7.

Par ailleurs, pour piloter tous les deux ensembles 10a, 10b de volets 100 de nouveau en position fermée p2, dans un mode de réalisation non limitatif illustré sur la figure 9, ledit procédé de pilotage 2 exécute l'étape de pilotage en position fermée p2 l'autre 10b des ensembles 10a, 10b de volets 100 avant l'un 10a des ensembles 10a, 10b de volets 100. Ainsi, pour passer de la phase c sur la figure 7, à la phase a sur la figure 7 on passe par la phase b sur la figure 7. Dans ce cas, tel qu'illustré sur la figure 9, le procédé de pilotage 2 comprend en outre :
- une étape de E3), illustrée F3(10a, p1, 10b, p2) de piloter l'autre 10b des ensembles 10a, 10b en position fermée p2. Dans l'exemple non limitatif illustré, c'est l'ensemble 10a qu'il positionne en position fermée p2, et
- une étape de E4), illustrée F4(10a, p2, 10b, p2) de piloter l'un 10a des ensembles 10a, 10b en position fermée p2. Dans l'exemple non limitatif illustré, c'est l'ensemble 10b qu'il positionne par la suite en position fermée p2.

Bien entendu la description de l'invention n'est pas limitée aux modes de réalisation décrits ci -dessus et au domaine décrit ci-dessus. Ainsi, dans un autre mode de réalisation non limitatif, l'axe de rotation Ax1 de l'actionneur 11 se situe dans un plan différent de celui Ax2 du levier inférieur 13b et de celui Ax3 de chaque volet de l'ensemble 10b. Ainsi, dans un autre mode de réalisation non limitatif, l'axe de rotation Ax4 du levier supérieur 13a se situe dans un plan différent de celui Ax5 de chaque volet de l'ensemble 10a.

Ainsi, l'invention décrite présente notamment les avantages suivants :
- elle permet d'avoir une stratégie de pilotage de volets souple,
- elle permet d'avoir deux ensembles 10a, 10b de volets 100 pilotés avec un unique actionneur 11,
- elle permet de n'ouvrir ou de ne fermer que tout ou partie des volets 100.

## Revendications

1. Système de volets pilotés (1) d'un véhicule comprenant deux ensembles (10a, 10b) de volets (100), chaque ensemble (10a, 10b) de volets (100) pouvant prendre une position ouverte (p1) et une position fermée (p2), ledit système de volets pilotés (1) comprenant en outre un actionneur (11) configuré pour piloter l'un (10a) des ensembles (10a, 10b) de volets (100) en position ouverte (p1) avant l'autre (10b) des ensembles (10a, 10b) de volets (100), **caractérisé en ce que** ledit système de volets pilotés comprend en outre :
- un ressort (12) reliant les deux ensembles (10a, 10b) de volets (100),
- un levier supérieur (13a) avec une came à course morte primaire (131a) configuré pour être entraîné par une bielle de liaison (14),
- un levier inférieur (13b) avec une came à course morte secondaire (131b) configuré pour être entraîné par ledit actionneur (11), et
- ladite bielle de liaison (14) relié audit actionneur (1) et reliant ledit levier supérieur (13a) et ledit levier inférieur (13b).

2. Système de volets pilotés (1) selon la revendication précédente, selon lequel ledit ressort (12) est configuré pour :
- être tendu lorsque les deux ensembles (10a, 10b) de volets (100) sont en position fermée (p2),
- se détendre de sorte à positionner en position ouverte (p1) l'un (10a) des ensembles (10a, 10b) de volets (100),
- être tendu lorsque les deux ensembles (10a, 10b) de volets (100) sont en position ouverte (p1).

3. Système de volets pilotés (1) selon l'une quelconque des revendications précédentes, selon lequel les deux ensembles (10a, 10b) de volets (100) sont initialement en position fermée (p2).

4. Système de volets pilotés (1) selon l'une quelconque des revendications précédentes, selon lequel l'un (10a) des ensembles (10a) de volets (100) s'étend selon un plan différent de l'autre (10b) des ensembles (10a, 10b) de volets (100) ou les deux ensembles (10, 10b) de volets (100) sont coplanaires.

5. Système de volets pilotés (1) selon l'une quelconque des revendications précédentes, selon lequel ledit système de volets pilotés (1) comprend en outre :
- un pièce de liaison primaire (101a) reliant les volets (10) de l'un (10a) des ensembles (10a, 10b) de volets (100) et comprenant au moins un doigt d'entraînement primaire (102a) qui vient en butée dans la came à course morte primaire (131a) lorsque l'un (10a) des ensembles de volets (100) est en position ouverte (p1) ou en position fermée (p2),
- un pièce de liaison secondaire (101b) reliant les volets (100) de l'autre (10b) des ensembles (10a, 10b) de volets (100) et comprenant au moins un doigt d'entraînement secondaire (102b) qui vient en butée dans la came à course morte secondaire (131b) lorsque l'autre (10b) des ensembles (10a, 10b) de volets (100) est en position ouverte (p1) ou en position fermée (p2), et qui glisse le long de ladite came à course morte secondaire (131b) lorsque l'un (10a) des ensembles est en position ouverte (p1).

6. Procédé de pilotage (2) d'un système de volets pilotés (1) d'un véhicule selon l'une des revendications précédentes, lesdits volets (100) faisant partie de deux ensembles (10a, 10b) de volets (100), chaque ensemble (10a, 10b) de volets (100) pouvant prendre une position ouverte (p1) et une position fermée (p2), **caractérisé en ce que** ledit procédé de pilotage (2) comprend une étape de piloter en position ouverte (p1) l'un (10a) des ensembles (10a, 10b) de volets (100) avant l'autre (10a) des ensembles (10a, 10b) de volets (100).

7. Procédé de pilotage (2) selon la revendication précédente, selon lequel les deux ensembles (10a, 10b) de volets (100) sont initialement en position fermée (p2).

8. Procédé de pilotage (2) selon l'une quelconque des revendications précédentes 6 ou 7, selon lequel pour piloter les deux ensembles (10a, 10b) de volets (100) en position ouverte (p1), ledit procédé de pilotage (2) exécute l'étape de pilotage en position ouverte (p1) de l'un (10a) des ensembles (10a, 10b) de volets (100) avant l'autre (10b) des ensembles (10a, 10b) de volets (100).

9. Procédé de pilotage (2) selon l'une quelconque des revendications précédentes 6 à 8, selon lequel pour piloter les deux ensembles (10a, 10b) de volets (100) en position fermée (p2), ledit procédé de pilotage (2) exécute l'étape de pilotage en position fermée (p2) de l'autre (10b) des ensembles (10a, 10b) de volets (100) avant l'un (10a) des ensembles (10a, 10b) de volets (100).

## Patentansprüche

1. System von gesteuerten Klappen (1) eines Fahrzeugs, das zwei Sätze (10a, 10b) von Klappen (100) umfasst, wobei jeder Satz (10a, 10b) von Klappen (100) eine geöffnete Position (p1) und eine geschlossene Position (p2) einnehmen kann, wobei das System von gesteuerten Klappen (1) außerdem eine Betätigung (11) umfasst, die so konfiguriert ist, dass sie einen (10a) der Sätze (10a, 10b) von Klappen (100) in die geöffnete Position (p1) vor dem anderen (10b) der Sätze (10a, 10b) von Klappen (100) steuert, **dadurch gekennzeichnet, dass** das System von gesteuerten Klappen ferner umfasst:
- eine Feder (12), die die beiden Sätze (10a, 10b) von Klappen (100) verbindet,
- einen oberen Hebel (13a) mit einer primären Totgangnocke (131a), der so konfiguriert ist, dass er von einer Verbindungsstange (14) angetrieben wird,
- einen unteren Hebel (13b) mit einer sekundären Totgangnocke (131b), der so konfiguriert ist, dass er von der Betätigung (11) angetrieben wird, und
- die Verbindungsstange (14), die mit der Betätigung (1) verbunden ist und den oberen Hebel (13a) und dem unteren Hebel (13b) verbindet.

2. System von gesteuerten Klappen (1) nach dem vorhergehenden Anspruch, wobei die Feder (12) so konfiguriert ist, dass:
- sie gespannt wird, wenn sich die beiden Sätze (10a, 10b) von Klappen (100) in der geschlossenen Position (p2) befinden,
- sie sich entspannt, um einen (10a) der Sätze (10a, 10b) von Klappen (100) in die geöffnete Position (p1) zu bringen,
- sie gespannt wird, wenn sich die beiden Sätze (10a, 10b) von Klappen (100) in der geöffneten Position (p1) befinden.

3. System von gesteuerten Klappen (1) nach einem der vorhergehenden Ansprüche, bei dem sich die beiden Sätze (10a, 10b) von Klappen (100) anfänglich in der geschlossenen Position (p2) befinden.

4. System von gesteuerten Klappen (1) nach einem der vorhergehenden Ansprüche, wobei sich einer (10a) der Sätze (10a) von Klappen (100) in einer anderen Ebene erstreckt als der andere (10b) der Sätze (10a, 10b) von Klappen (100) oder beide Sätze (10, 10b) von Klappen (100) koplanar sind.

5. System von gesteuerten Klappen (1) nach einem der vorhergehenden Ansprüche, wobei das System von gesteuerten Klappen (1) ferner umfasst:
- ein primäres Verbindungsteil (101a), das die Klappen (10) des einen (10a) der Sätze (10a, 10b) von Klappen (100) verbindet und mindestens einen primären Mitnehmerfinger (102a) umfasst, der in der primären Totgangnocke (131a) anschlägt, wenn sich einer (10a) der Sätze von Klappen (100) in der geöffneten Position (p1) oder in der geschlossenen Position (p2) befindet,
- ein sekundäres Verbindungsteil (101b), das die Klappen (100) des anderen (10b) der Sätze (10a, 10b) von Klappen (100) verbindet und mindestens einen sekundären Mitnehmerfinger (102b) umfasst, der in der sekundären Totgangnocke (131b) anschlägt, wenn der andere (10b) der Sätze (10a, 10b) von Klappen (100) in der geöffneten Position (p1) oder geschlossenen Position (p2) ist, und der entlang der sekundären Totgangnocke (131b) gleitet, wenn sich einer (10a) der Sätze in der geöffneten Position (p1) befindet.

6. Verfahren zur Steuerung (2) eines Systems von gesteuerten Klappen (1) eines Fahrzeugs nach einem der vorhergehenden Ansprüche, wobei die Klappen (100) Teil von zwei Sätzen (10a, 10b) von Klappen (100) sind, wobei jeder Satz (10a, 10b) von Klappen (100) eine geöffnete Position (p1) und eine geschlossene Position (p2) einnehmen kann, **dadurch gekennzeichnet, dass** das Verfahren zur Steuerung (2) einen Schritt umfasst, bei dem in der geöffneten Position (p1) einer (10a) der Sätze (10a, 10b) von Klappen (100) vor dem anderen (10a) der Sätze (10a, 10b) von Klappen (100) gesteuert wird.

7. Verfahren zur Steuerung (2) nach dem vorhergehenden Anspruch, bei dem sich die beiden Sätze (10a, 10b) von Klappen (100) anfänglich in der geschlossenen Position (p2) befinden.

8. Verfahren zur Steuerung (2) nach einem der vorhergehenden Ansprüche 6 oder 7, nach dem, um das Steuern der beiden Sätze (10a, 10b) von Klappen (100) in geöffneter Position (p1) auszuführen, das Verfahren zur Steuerung (2) den Schritt des Steuerns in geöffneter Position (p1) eines (10a) der Sätze (10a, 10b) von Klappen (100) vor dem anderen (10b) der Sätze (10a, 10b) von Klappen (100) ausführt.

9. Verfahren zur Steuerung (2) nach einem der vorhergehenden Ansprüche 6 bis 8, nach dem, um das Steuern der beiden Sätze (10a, 10b) von Klappen (100) in geschlossener Position (p2) auszuführen, das Verfahren zur Steuerung (2) den Schritt des Steuerns in geschlossener Position (p2) eines (10b) der Sätze (10a, 10b) von Klappen (100) vor dem anderen (10a) der Sätze (10a, 10b) von Klappen (100) ausführt.

## Claims

1. System (1) of controlled flaps for a vehicle, comprising two sets (10a, 10b) of flaps (100), each set (10a, 10b) of flaps (100) being able to assume an open position (p1) and a closed position (p2), said system (1) of controlled flaps further comprising an actuator (11) configured to drive one (10a) of the sets (10a, 10b) of flaps (100) into the open position (p1) before the other (10b) of the sets (10a, 10b) of flaps (100), **characterized in that** said system of controlled flaps further comprises:
- a spring (12) connecting the two sets (10a, 10b) of flaps (100),
- an upper lever (13a) with a primary lost motion cam (131a) configured to be driven by a connecting rod (14),
- a lower lever (13b) with a secondary lost motion cam (131b) configured to be driven by said actuator (11), and
- said connecting rod (14) connected to said actuator (1) and connecting said upper lever (13a) and said lower lever (13b).

2. System (1) of controlled flaps according to the preceding claim, wherein said spring (12) is configured to:
- be tensioned when the two sets (10a, 10b) of flaps (100) are in the closed position (p2),
- relax so as to position in the open position (p1) one (10a) of the sets (10a, 10b) of flaps (100),
- be tensioned when the two sets (10a, 10b) of flaps (100) are in the open position (p1).

3. System (1) of controlled flaps according to either one of the preceding claims, wherein the two sets (10a, 10b) of flaps (100) are initially in the closed position (p2).

4. System (1) of controlled flaps according to any one of the preceding claims, wherein one (10a) of the sets (10a) of flaps (100) extends in a different plane from the other (10b) of the sets (10a, 10b) of flaps (100) or the two sets (10, 10b) of flaps (100) are coplanar.

5. System (1) of controlled flaps according to any one of the preceding claims, wherein said system (1) of controlled flaps further comprises:
- a primary connecting part (101a) connecting the flaps (10) of one (10a) of the sets (10a, 10b) of flaps (100) and comprising at least one primary drive finger (102a) which comes into abutment in the primary lost motion cam (131a) when one (10a) of the sets of flaps (100) is in the open position (p1) or in the closed position (p2),
- a secondary connecting part (101b) connecting the flaps (100) of the other (10b) of the sets (10a, 10b) of flaps (100) and comprising at least one secondary drive finger (102b) which comes into abutment in the secondary lost motion cam (131b) when the other (10b) of the sets (10a, 10b) of flaps (100) is in the open position (p1) or in the closed position (p2), and which slides along said secondary lost motion cam (131b) when one (10a) of the sets is in the open position (p1).

6. Method (2) for controlling a system (1) of controlled flaps of a vehicle according to one of the preceding claims, said flaps (100) forming part of two sets (10a, 10b) of flaps (100), each set (10a, 10b) of flaps (100) being able to assume an open position (p1) and a closed position (p2), **characterized in that** said control method (2) comprises a step of driving one (10a) of the sets (10a, 10b) of flaps (100) into the open position (p1) before the other (10a) of the sets (10a, 10b) of flaps (100).

7. Control method (2) according to the preceding claim, wherein the two sets (10a, 10b) of flaps (100) are initially in the closed position (p2).

8. Control method (2) according to either one of the preceding Claims 6 and 7, wherein, to drive the two sets (10a, 10b) of flaps (100) into the open position (pl), said control method (2) executes the step of driving one (10a) of the sets (10a, 10b) of flaps (100) into the open position (p1) before the other (10b) of the sets (10a, 10b) of flaps (100).

9. Control method (2) according to any one of the preceding Claims 6 to 8, wherein, to drive the two sets (10a, 10b) of flaps (100) into the closed position (p2), said control method (2) executes the step of driving the other (10b) of the sets (10a, 10b) of flaps (100) into the closed position (p2) before one (10a) of the sets (10a, 10b) of flaps (100).
